# EUROPEAN PATENT APPLICATION

(11) **EP 2 224 126 A2**
(43) Date of publication of application: **01.09.2010**
(21) Application number: 10153014.5
(22) Date of filing: 09.02.2010
(51) Int. Cl.: F03D 1/00

(54) **Lowering and raising a single wind turbine rotor blade from six-o'clock position**

(30) Priority: 25.02.2009 US 392353
(71) Applicant: General Electric Company, Schenectady, NY 12345 (US)
(72) Inventor: Reed, Bryan P., Scotia, NY 12302 (US); Converse, Thomas O., Lanesborough, MA 01237 (US); Olson, Steven H., Greer, SC 29651 (US); Johnson, Michael R., Thornton, NH 03285 (US)
(74) Representative: Bedford, Grant Richard

(57) **Abstract**

An arrangement 200 and method for lowering and raising a single rotor blade 305 of a wind turbine 30 from a six-o'clock position is provided. Lifting fixtures 240, 245 are symmetrically attached on a rotor hub 235 at pitch bearing flanges for rotor blades 225, 230 about the rotor blade 305 being replaced. Lifting lines 270, 275 from coordinated ground winches 60 pass over the lifting fixtures 240, 245 to support the blade 220, attaching to a blade harness 300. The blade harness 300 attaches over a substantial length of the rotor blade 220, distributing the blade weight broadly. A tail pick crane 80 facilitates transfer of the rotor blade 220 between a vertical position and a horizontal position stored position.

## Description

The invention relates generally to wind turbines and more specifically to an apparatus and method for lowering and raising a single wind turbine rotor blade from the six-o'clock position.

Rotor blades are attached to a rotor hub of a wind turbine at a rotor hub flange. Installation of the rotor blades to the rotor hub flange may be in the initial installation of the wind turbine. Removal and replacement of rotor blades may be required over the operational life of the wind turbine. Rotor blades may require replacement due to damage caused by environmental sources such as lightning strikes, corrosion and hail or from physical stresses or defects within a blade.

With environmental demands for clean, non-carbon dioxide generating energy sources, wind energy is becoming an increasingly larger source of electric power domestically and internationally. Taller wind towers with larger and heavier rotor blades are being produced to more effectively capture the wind and its power-generating capacity. Wind turbine towers may be 100 meters tall and individual wind turbine rotor blades may extend 50 meters. Rotor blade removal and replacement operations therefore take place at great heights.

The replacement of a rotor blade may often be accomplished with a large crane. Such a large crane must have load capacity for the full blade and be able to lift the full blade to the height of the rotor hub. The rotor blade may be positioned hanging vertically with respect to the ground or horizontally facing to one side of the wind turbine. Significant expense is incurred in renting, procuring, operating and removing the large crane. Further, when a blade is removed/replaced in the horizontal position, the remaining 2 blades are in the 11 o'clock and 7 o'clock positions, creating a large moment on the hub. This naturally unstable position relies on the integrity of the brake to ensure no incidents associated with inadvertent rotation occur. The instability issues associated with the horizontal lift of a wind turbine rotor blade may be avoided by positioning the rotor hub for which the blade is to be removed or replaced in a six-o'clock position.

Accordingly, it is desirable to provide a simple, safe and cost-effective means for mounting single rotor blades of wind turbines without the need for the large cranes used in prior art for lifting of rotor blades.

The present invention relates to a lifting arrangement and method for lifting and lowering a single rotor blade from a six-o'clock position without a need for a crane large enough and with sufficient load capacity to raise the rotor blade to the height of the rotor hub mounting location.

Briefly in accordance with one aspect of the present invention, a method is provided for removing a rotor blade from a rotor of a wind turbine installed atop a wind turbine tower. The method includes attaching a first pulley to a first attachment point at a first adjacent rotor blade to a rotor blade being removed and attaching a second pulley to a second attachment point at a second adjacent rotor blade to the rotor blade being removed. The method further includes positioning the rotor blade being removed in a six-o'clock position. A blade harness is attached over a substantial length of the blade being removed. A first lifting line from a first ground winch over the first pulley is attached to a first side of the blade harness. A second lifting line from a second ground winch is attached over the second pulley to a second side of the blade harness. The method further includes lowering the blade being removed by coordinated winch operation. A tail end support line is further attached between the blade harness and a tail pick crane. The rotor blade being removed is rotated to a horizontal resting position by coordinated winch operation and tail pick crane operation.

In accordance with a second aspect of the present invention, a method is provided for installing a rotor blade onto a rotor of a wind turbine installed atop a wind turbine tower. The method includes positioning a mounting flange of a hub for a rotor blade being installed in a six-o'clock position and locating the rotor blade being installed underneath the hub of the rotor. The method further includes attaching a blade harness over a substantial length of the rotor blade being installed. A lifting line from a first ground winch over a first pulley at the hub is attached to a first side of the blade harness and a lifting line from a second ground winch over a second pulley at the hub is attached to a second side of the blade harness. The method also includes attaching a tail end support line between the blade harness and a tail pick crane and rotating the rotor blade being installed from a horizontal position to a vertical position by coordinated winch operation and tail pick crane operation. When in a vertical position, the rotor blade is raised by coordinated ground winch operation

According to another aspect of the present invention, an arrangement for lifting and removal is provided for a single wind turbine blade from a six-o'clock position on a wind turbine tower: The lifting arrangement includes a rotor hub wherein a mounting for the rotor blade is parked at a six-o'clock position. A first pulley and a second pulley are mounted symmetrically on the rotor hub about the mounting for the rotor blade. A blade harness is disposed over a substantial length of the rotor blade. A first ground winch and a second ground winch are disposed around the base of the wind turbine tower. A lifting line from the first ground winch over a first pulley on the hub attached to a first side of the blade harness is provided along with a lifting line from a second ground winch over a second pulley on the hub attached to a second side of the blade harness. A tail pick crane is provided, supporting a tail end support line between the blade harness and the tail pick crane.

Various features, aspects, and advantages of the present invention will become better understood when the following detailed description is read with reference to the accompanying drawings in which like characters represent like parts throughout the drawings, wherein:
FIG. 1 illustrates a simplified representation of a lifting arrangement for a rotor blade from a six-o'clock position;
FIG. 2 illustrates a perspective view of a rotor blade bearing flange of the rotor hub with a removed blade;
FIG. 3 illustrates an embodiment of a lifting arrangement for the rotor blade being replaced;
FIG. 4 illustrates an embodiment of an inventive blade harness adapted for lifting a rotor blade for attachment to a rotor hub of a wind turbine tower;
FIG. 5 illustrates an embodiment of a transverse strap of the blade harness;
FIGs. 6A-6B illustrate an embodiment of a lifting plate; and
FIG. 7 illustrates a transfer of a rotor blade between a vertical and horizontal position.

The following embodiments of the present invention have many advantages, including allowing replacement of a wind turbine rotor blade without the need for a large expensive heavy-duty crane. The method further allows removal and replacement of the rotor blade with simple equipment in a manner that protects the blade from damage. A blade harness is provided that distributes the weight during the lift over a substantial length of the rotor blade and provides protection for the trailing edge against damage during the lift.

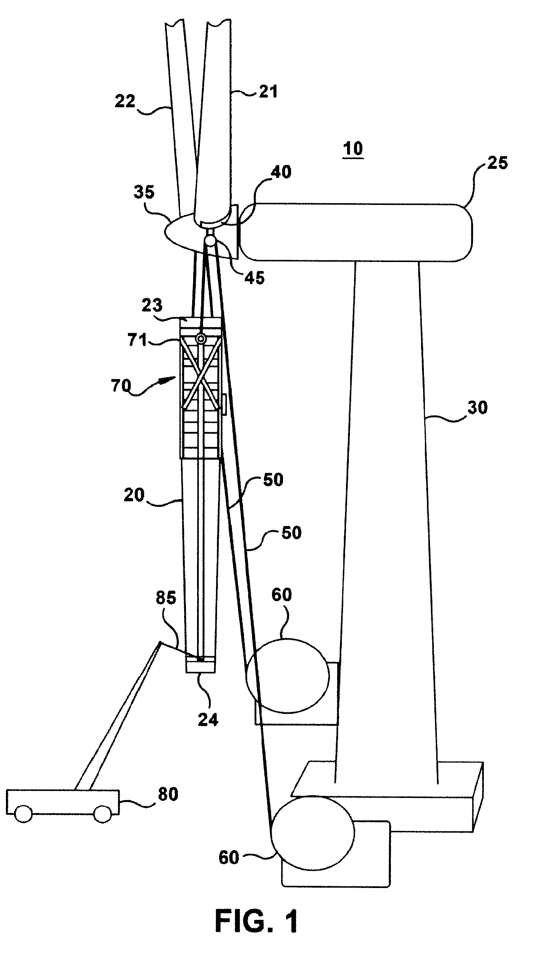

FIG. 1 illustrates a simplified representation of an embodiment of an arrangement for lifting and removal of a rotor blade from a six-o'clock position on a rotor hub of a wind turbine tower. The lifting arrangement 10 is provided for lifting of a rotor blade 20 mounted in a six-o'clock (vertical-hanging) position. A nacelle 25 is positioned atop the wind turbine tower 30 and houses wind turbine power generating equipment (not shown) connected to a rotor hub 35. Three rotor blades are shown attached to the rotor hub, including rotor blade 20 at the six-o'clock position and a first adjacent blade 21 and a second adjacent blade 22. Mounting blocks 40 (one shown) may be attached to the rotor hub 35. A pulley block (one shown) 45 is suspended from each of the mounting blocks 40. Lifting lines 50 are run from ground winches 60 over the pulley blocks 45 and attach to lifting plates 71 of blade harness 70. The blade harness 70 may extend along a substantial length of the rotor blade 20 from root 23 to tip 24. A tail end support line 85 may attach to the blade harness in proximity to the tip 24 of the rotor blade 20 from tail pick crane 80 and provide support while transferring the rotor blade between a vertical and horizontal orientation.

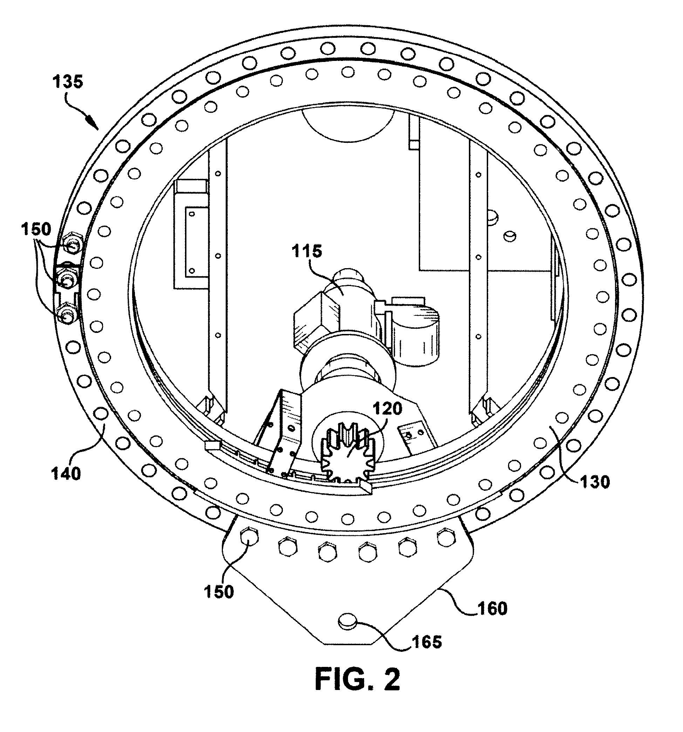

FIG. 2 illustrates a perspective view of a rotor blade bearing flange of the rotor hub with a removed blade. The pitch drive 115, which is firmly fixed to rotor hub 135, is mounted inside the rotor hub. Drive element 120 of pitch drive 115 is a gear wheel, which interacts with the inner gear rim of flange 130. Flange 130 may be firmly attached to a rotor blade (not shown) with studs from rotor blade (not shown) engaging holes around circumference of the flange. Flange 130 is rotatable within rotor hub 135 (attached to the rotating race for the rotor blade pitch bearing). Thus, pitch drive 115 enables a swiveling movement of its corresponding rotor blade, whereby the swivel axis of the rotor blade is roughly parallel to the longitudinal axis of the blade. Outer flange 140 may comprise stationary race for the rotor blade pitch bearing and is bolted with a plurality of peripheral bolts 150 to the rotor hub 135.

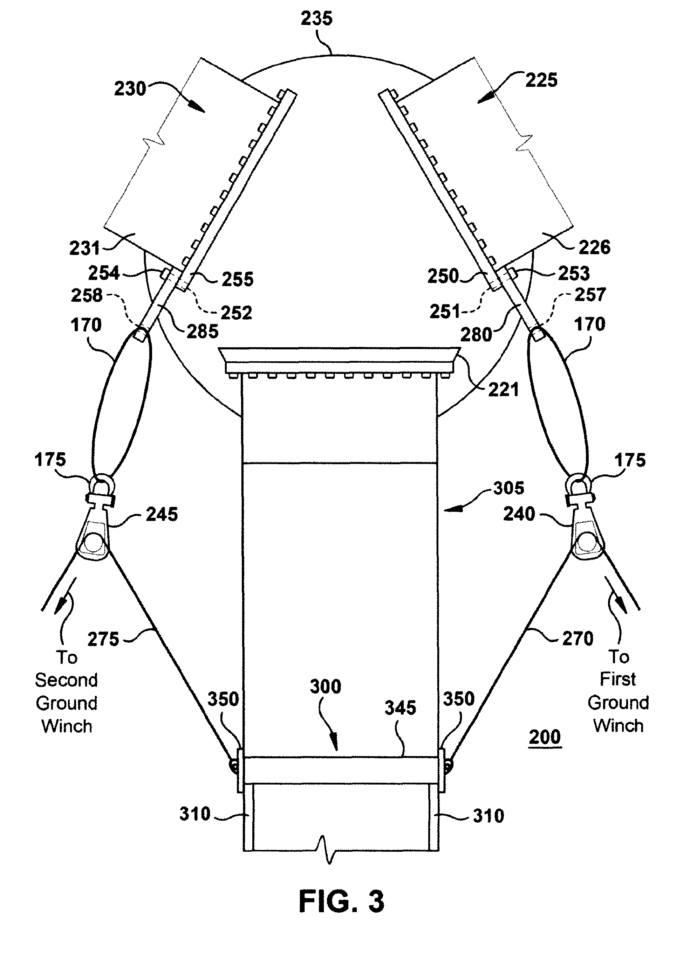

The bolts 150 holding outer flange 140 may also serve for attaching mounting 160 in place on the rotor hub 135. As attached, the mounting 160 may project generally radially from the hub 135, and circumferentially with respect to the outer flange 140 of the rotor blade bearing, such that mountings on adjacent rotor blade bearing outer flanges 140 line up symmetrically with respect to the rotor blade being replaced. At least one hole 165 may be provided in the mounting 160 for lifting slings 170 (FIG. 3) or other connections for supporting pulleys associated with the lifting of the rotor blade.

FIG. 3 illustrates an embodiment of a lifting arrangement for the rotor blade being replaced. The lifting arrangement 200 may include a rotor hub 235 wherein a mounting 221 is provided for the rotor blade 305 parked at a six-o'clock position. A first pulley block 240 and a second pulley block 245 may be mounted symmetrically to the rotor hub 235 about the mounting for the rotor blade 305. A blade harness 300 may be disposed over a substantial length of the rotor blade 305. A first ground winch (not shown) and a second ground winch (not shown) may disposed around the base of the wind turbine tower. A first lifting line 270 from the first ground winch may extend over a first pulley 240 and be attached to a first side of the blade harness 300. A second lifting line 275 from the second ground winch over a second pulley 245 may be attached to a second side of the blade harness 300. A tail pick crane (not shown) may be provided to maneuver a tail end support line at a tip of the blade.

More particularly, the first pulley 240 may be supported by a first mounting block 280 attached to a first attachment point 250 on the hub 235 to a first side of the rotor blade 305. A second mounting block 285 for the second pulley 245 may be attached to a second attachment point 255 on the hub 235 to a second side of the rotor blade 305. The first mounting block 280 may be attached at the pitch blade bearing flange 250 on first adjacent rotor blade 225. A second mounting block 285 may be attached at the pitch blade bearing flange 255 at a second adjacent rotor blade 230.

Herein the mounting of the first mounting block 280 and the second mounting block 285 on the hub 235 are generally symmetrical with respect to the rotor blade 305 to facilitate lifting and lowering of the rotor blade. Preferred attachment points for the first mounting block 280 second mounting block 285 may be to studs associated with the pitch bearing flanges 250, 255 for the respective first adjacent blade 225 and second adjacent blade 230. However, other attachment points may be provided on the hub 235. A plurality of nuts 253, 254 preferentially about five nuts may be removed from the respective pitch bearing flange studs 251, 252 to make the studs available for attachment for each of the mounting blocks. The nuts removed 253, 254 may centered forward-to-aft along the hub so as to line up with the mounting blocks 280, 285 generally centered forward-to-aft on the rotor blade surface 226, 231 (See 150 FIG. 2). The first mounting block 280 and the second mounting block 285 may be attached to the studs with the removed nuts. The first mounting block 280 and the second mounting block 285 may each include a hole 257, 258 for accepting supports for the first pulley 240 and the second pulley 245, respectively. Such supports may include slings 170 and shackles 175. A first lifting line 270 and a second lifting line 275 may attach to lifting plates 350 on blade harness 350.

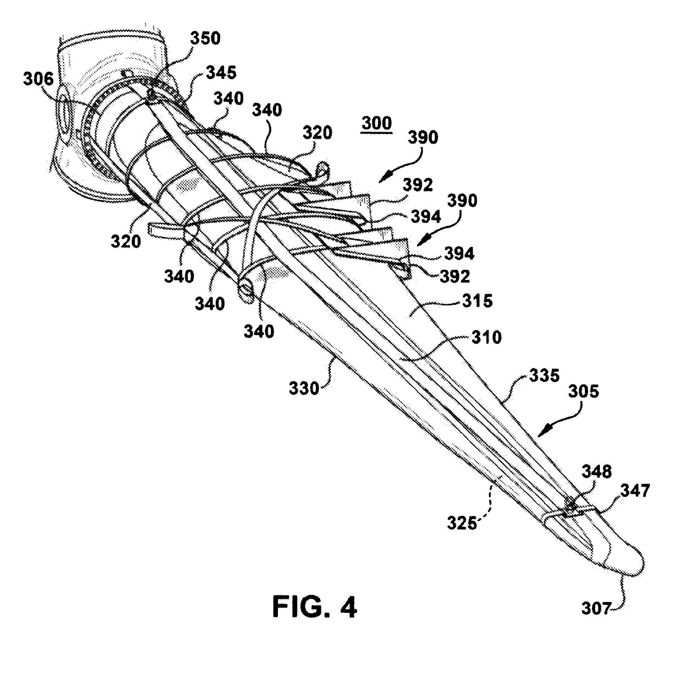

FIG. 4 illustrates an embodiment of an inventive blade harness adapted for lifting a rotor blade for attachment to a rotor hub of a wind turbine tower. The blade harness 300 includes main longitudinal straps 310 adapted for disposition along a substantial length of a rotor blade. At least one main longitudinal strap 310 may be provided along the pressure side 310 of the rotor blade 305 and at least one main longitudinal strap may be provided along the suction side 325 of the rotor blade 305. Additional longitudinal straps 320 may be provided along the leading edge 330 and trailing edge 335 of the rotor blade 305. The main longitudinal straps 310 may generally be centered between the leading edge 330 and the trailing edge 335 one each side of the rotor blade 305.

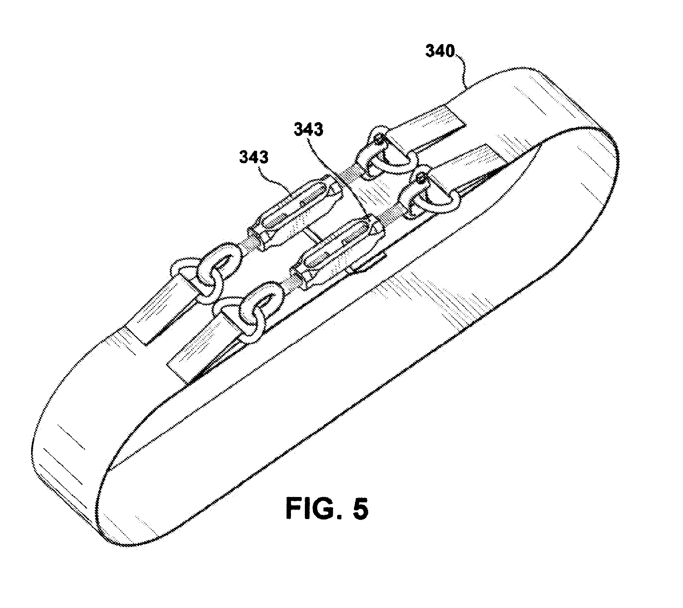

The blade harness 300 also includes a plurality of transverse straps 340 adapted for deployment around the rotor blade at various longitudinal positions. Such deployment may provide for distribution of the weight of the rotor blade 305 along a substantial length of the rotor blade, avoiding concentration of weight in a specific area such as the neck or root end 306. The transverse straps 340 include tightening means to form a snug fit around the rotor blade 305 at the various longitudinal positions. Such tightening means may include, but not be limited to, turnbuckles 343, as illustrated in FIG. 5. The transverse straps 340 may engage with the main longitudinal straps 310 for transfer of a blade weight between the transverse straps and the longitudinal straps as the rotor blade 305 is lifted and moved between a horizontal and vertical orientation.

One or more transverse straps 340 may be joined with the main longitudinal straps 310 at a lifting plate 350. At least one lifting plate 350 is provided on the pressure side 315 of the rotor blade 305 and at least one lifting plate is provided on a suction side 325 of the rotor blade 305. Preferentially, the transverse strap 345 closest to the root end 306 of the rotor blade 305 includes the lifting plates 350 providing for attachment to lifting lines (270, 275 FIG. 3) for hoisting the rotor blade 305.

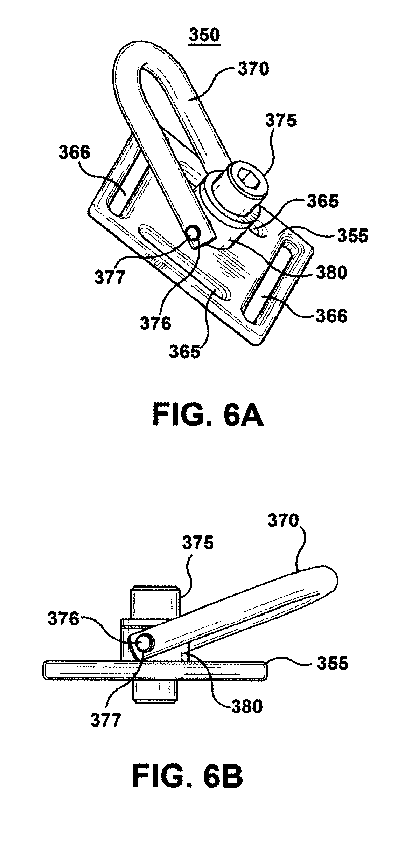

FIG. 6A illustrates an isometric view of an embodiment of the lifting plate. FIG. 6B illustrates a swivel feature of an embodiment of the lifting plate. The lifting plate 350 may be fabricated from a plate 355 of alloy steel or similar material. Preferably each individual lifting plate of at least one lifting plate on the pressure side and at least one lifting plate on the suction side of the rotor blade will carry the full load of a rotor blade. The lifting plate 350 may include two cutouts 366 for engagement with the main longitudinal straps 310 and one or more cutouts 365 for engagement with the transverse straps 345. Further, the lifting plate 350 may include a lifting lug 370 adapted to swivel around a center pin 375 fixed to the lifting plate. The lifting lug 370 may include a pivot holes 376. Pins 377 protrude from collar 380 on the center pin 375 and engage with the pivot holes 376 of lifting lug 370, allowing the lifting lug to pivot about the center pin 375. The lifting lug 370 may attach to lifting lines to support the full weight of the rotor blade during lifting. The swivel action of the lifting lug 370 may provide support for the blade weight as the rotor blade is shifted between the horizontal and vertical position during lifts between the ground and the rotor hub.

The lifting arrangement according to FIG. 4 may further include at least one blade protector 390 for the trailing edge 335 of the rotor blade 305. The blade protector 390 forms a contoured surface around a section of the trailing edge 335 of the rotor blade 305. The blade protector 390 may include a stiff outer covering 392 with a cutout conformed to a general shape of the rotor blade surface along a pressure side of the trailing edge, the trailing edge, and along a suction side side of the trailing edge. The blade protector may also include a flexible inner cushion 394 conformed to a general shape of the rotor blade surface along a pressure side of the trailing edge, the trailing edge, and along a suction side side of the trailing edge. One or more transverse straps 340 may engage with the blade protector 390, distributing the force applied by the tightened transverse strap along the section of the trailing edge 335 interfaced with the blade protector. Otherwise the transverse straps 340 would apply their force along a narrow area of the trailing edge 335, potentially causing damage.

Referring again to FIG. 4, a transverse strap 347 closest to the tip end of the rotor blade may further include an tail end plate 348 on each side of the rotor blade for connection of a tail end support line. The tail end plate may be fashioned similar to the lifting plate of FIG. 6 or may be constructed in an alternative fashion to connect with the transverse strap closest to the tip end. The tail end support line provides support to the tail end of the rotor blade in the transition between the vertical position and the horizontal position during both lifting and lowering.

One aspect of the present invention provides a method for lowering and raising a single wind turbine rotor blade from the six-o'clock position. In preparation for lifting, the area under the tower should be cleared of unnecessary personnel and equipment. Ground winches are positioned in an area that will allow for the best position to run the lifting line over the pulleys and to the rotor blade. Usually a position about 50 meters behind or in front of the tower is a good position, however, alternative placement may be required due to geographical constraints.

The rotor may be rotated so blades are rabbit-eared with the replaceable rotor blade in the 3 o'clock position and the left side of a first adjacent blade is in the top position of the hub as viewed from the nacelle. A rotor lock is applied to prevent blade rotation. A mounting block with an attachment eye for a first pulley is attached to the blade mounting hub for the first adjacent blade. To accomplish a preferrred mounting, a plurality, normally five, of pitch bearing bolts are removed from the pitch bolt studs of the first adjacent blade. The mounting block may be bolted to the five pitch bolt studs. The pulley block may then be attached to the mounting block attachment eye. However, other mounting locations may be provided on the hub.

The rotor lock is released and the rotor rotated so the blades are rabbit-eared, with the replaceable blade in the 9 o'clock position and the right side of the second adjacent blade is in the top position of the hub as viewed from the nacelle. The high speed rotor lock is applied. A plurality of nuts may be removed from the pitch bearing bolts for the blade adjacent to the replaceable blade

A mounting block with an attachment eye for a second pulley is attached to the blade mounting hub for the second adjacent blade. To accomplish a preferrred mounting, a plurality, normally five, of pitch bearing bolts are removed from the pitch bolt studs of the second adjacent blade. The mounting block may be bolted to the five pitch bolt studs. The pulley block may then be attached to the mounting block attachment eye. However, other mounting locations may be provided on the hub.

The rotor lock is released and the rotor rotated so the blades are rabbit-eared, with the replaceable blade in the 9 o'clock position, and the right side of the adjacent blade is in the top position of the hub as viewed from the nacelle. The blade harness is wrapped around the blade tip, ensuring the adjustable turnbuckles are loosened to its maximum looseness, allowing the blade harness to slip over the blade as it is raised. The blade harness may be attached the blade harness to man basket for lifting. The man basket and blade harness are raised, keeping the harness around the blade to the point on the blade where the blade harness will rest. The blade harness is tightened until snug to the blade. A plurality of tag lines may be attached to the rotor blade for lateral support during lifting and lowering.

A first lifting line from a first ground winch may be raised and threaded through the first pulley block. The first lifting line is lowered and attached to a lifting plate on a first side of the blade harness. A second lifting from a second ground winch may be raised and threaded through the second pulley block. The second lifting line is lowered and attached to a lifting plate on a second side of the blade harness.

Operation is coordinated between operators of the ground winches to take up slack evenly between winches so wire ropes are taught. Blade nuts for rotor blade being removed are carefully removed, maintaining the level control over the blade, while taking up slack with coordinated action of the first ground winch and the second ground winch and the tag lines.

The rotor blade is lowered by coordinated operation of the two ground winches simultaneously.

When the rotor blade is at a point where the tail pick crane can be attached, winch operation is stopped and the blade tip is attached to the tail pick crane. The rotor blade is further lowered to a horizontal position on the ground or on a mounting truck using the tail pick crane and tag lines as guides. Lateral movement of the blade is controlled with the tag lines. The tail pick crane controls all other directional movement of the blade, as the coordinated ground winches complete lowering.

In preparation for restoration of the rotor, a replacement rotor blade is positioned on the ground directly underneath hub. The blade harness is attached to the replacement rotor blade. The blade harness is tightened to fit snugly on new blade such that no slippage will occur when blade is raised. Lift lines and tag lines are attached to the blade harness.

Normally, for such a replacement, it would be anticipated that the pulley blocks would have been mounted on the hub and the lifting lines run over the pulley blocks. Otherwise this equipment would be installed as previously described. The replacement rotor blade is raised using coordinated operation of the ground winches and tail pick crane. Lateral movement of the blade is controlled with the tag lines. When blade is at a point where the tail pick crane can be removed, winch operation is stopped and the attachment to the rotor blade tip from the tail pick crane is removed. Lifting with coordinated winch operation continues until the rotor blade gets close enough to the hub to zero the blade with the mount, aligning the rotor blade bolts with the correct holes to zero the blade. Once the rotor blade bolts in the correct position, winch operators will slowly move the blade bolts into the bolt holes. A tightening sequence is performed for the nuts on bolts.

When the rotor blade is secured to the hub, lifting lines are slacked. A man-basket may be positioned to support the blade harness. The blade harness is untightened from the rotor blade and the connections with the lifting lines are detached. The blade harness is lowered to the ground. The ground winches raise the lifting lines to the pulley blocks. The lifting lines are then lowered to the ground.

The rotor locks are released and the rotor is positioned for removal of the first pulley block and the first mounting block on the hub. The rotor is then positioned for removal of the second pulley block and the second mounting block on the hub. When the equipment has been removed from the hub and lowered to the ground, the installation may be operationally checked.

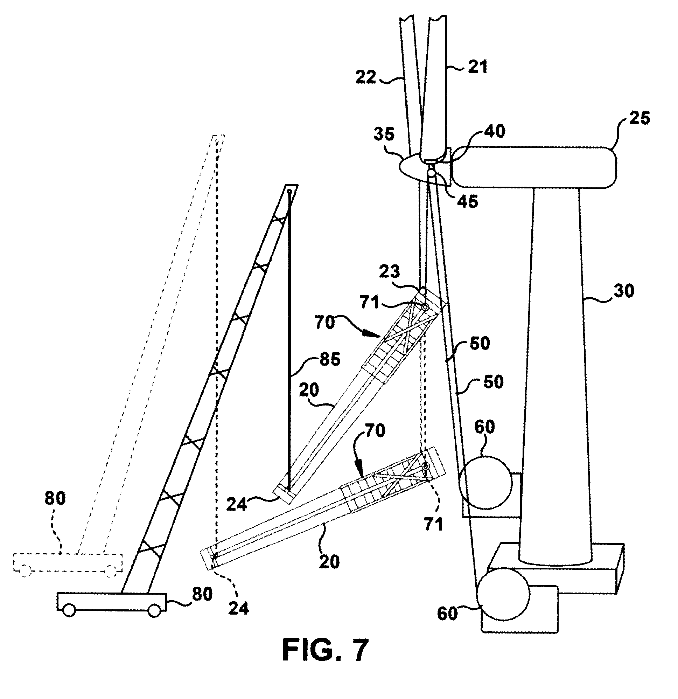

FIG. 7 illustrates a transfer of a rotor blade between a vertical and horizontal position.
FIG. 1 illustrated the rotor blade in a vertical position. FIG. 7 utilizes the reference numbering of FIG. 1 for the transfer. Rotor blade 20 is being lowered or raised for removal or removal from hub 35 of wind turbine tower 30 by the coordinated action of ground winches 60 with tail pick crane 80. Ground winches 60 provided coordinated control of lift lines 50 over pulley blocks 45 (one shown) connecting to mounting blocks 40 (one shown) on the hub 35. The lift lines 50 attach to lifting plates 71 (one shown) on harness 70 over the rotor blade 20. Tail pick crane 80, through tail support line 85, connects to harness for the rotor blade 20 near tip end 24. Tail pick crane 80 operation is coordinated with ground winch 60 operation to transfer the rotor blade 20 between vertical and horizontal positions while mounting or removing the rotor blade 20.

While various embodiments are described herein, it will be appreciated from the specification that various combinations of elements, variations or improvements therein may be made, and are within the scope of the invention.

Various aspects and embodiments of the present invention are defined by the following numbered clauses:
1. A method for removing a rotor blade from a rotor of a wind turbine with three blades installed atop a wind turbine tower, the method comprising:
   attaching a first pulley to a first attachment point at a first adjacent rotor blade to a rotor blade being removed and attaching a second pulley to a second attachment point at a second adjacent rotor blade to the rotor blade being removed;
   positioning the rotor blade being removed in a six o'clock position;
   attaching a blade harness over a substantial length of the blade being removed;
   attaching a first lifting line from a first ground winch over the first pulley to the blade harness and attaching a second lifting line from a second ground winch over the second pulley to the blade harness;
   attaching a tail end support line between the blade harness and a tail pick crane
   lowering the rotor blade being removed by coordinated winch operation; and
   rotating the rotor blade being removed to a horizontal resting position by coordinated winch operation and tail pick crane operation.
2. The method according to Clause 1, step of attaching a first pulley and a second pulley comprising:
   positioning the rotor blade being removed in a three o'clock position with the left side of the first adjacent blade in the top position of the hub as viewed from the nacelle;
   removing a plurality of pitch bearing bolts from bearing studs on an adjacent side of the first adjacent blade
   bolting a first mounting block for the first pulley to the pitch bearing studs;
   attaching the first pulley to the first mounting block;
   positioning the rotor blade being removed in a three o'clock position with the right side of the second adjacent blade in the top position of the hub as viewed from the nacelle;
   removing a plurality of pitch bearing bolts from bearing studs on an adjacent side of the second adjacent blade;
   bolting a second mounting block for the second pulley to the bearing studs; and
   attaching a second pulley to the second mounting block.
3. The method according to any preceding Clause, the step of attaching a blade harness over a substantial length of blade comprising:
   placing a loosened blade harness over the blade tip;
   raising the blade harness over the substantial length of the blade; and
   tightening a plurality of blade harness belts to snug the blade harness over the sustantial length of the blade.
4. The method according to any preecding Clause, the step of attaching a blade harness over a substantial length of blade comprising: attaching a plurality of tag lines to a tail end of the blade harness.
5. The method according to any preceding Clause, the step of lowering further comprising: controlling a sideways motion of the blade being lowered with ground personnel on the plurality of tag lines.
6. The method according to any preceding Clause, the step of attaching a blade harness over a substantial length of blade further comprising: providing at least one protector for the trailing edge of the blade within the blade harness wherein the at least one protector distributes a holding stress from the blade harness along the trailing edge.
7. A method for installing a rotor blade onto a rotor of a wind turbine atop a wind turbine tower, the method comprising:
   positioning a mounting surface of a hub for a rotor blade being installed in a six-o'clock position;
   locating the rotor blade being installed directly underneath the hub of the rotor;
   attaching a blade harness over a substantial length of the rotor blade being installed;
   atttaching a lifting line from a first ground winch over a first pulley on the hub to a first side of the blade harness and attaching a lifting line from a second ground winch over a second pulley on the to a second side of the blade harness;
   attaching a tail end support line between the blade harness and a tail pick crane; and
   rotating the rotor blade being installed from a horizontal position to a vertical position by coordinated ground winch operation and tail pick crane operation; and
   raising the rotor blade being removed by coordinated ground winch operation.
8. The method according to any preceding Clause, the step of attaching a blade harness over a substantial length of blade comprising:
   placing a loosened blade harness over a blade tip;
   raising the blade harness over the substantial length of the rotor blade;
   tightening a plurality of blade harness belts to snug the blade harness over the sustantial length of the rotor blade.
9. The method according to any preceding Clause, the step of attaching a blade harness over a substantial length of rotor blade further comprising: attaching a plurality of tag lines to a tail end of the blade harness.
10. The method according to any preceding Clause, the step of raising further comprising: controlling a sideways motion of the blade being raised with personnel on the plurality of tag lines.
11. An arrangement for lifting and removal of a single wind turbine blade from a six-o'clock position on a wind turbine tower, the lifting arrangement comprising:
   a rotor hub wherein a mounting for the rotor blade is parked at a six-o'clock position;
   a first pulley and a second pulley mounted symmetrically on the rotor hub about the mounting for the rotor blade;
   a blade harness disposed over a substantial length of the rotor blade;
   a first ground winch and a second ground winch disposed around the base of the wind turbine tower;
   a lifting line from the first ground winch over the first pulley on the rotor hub attached to a first side of the blade harness and a lifting line from the second ground winch over the second pulley on the rotor hub attached to a second side of the blade harness;
   a tail pick crane; and
   a tail end support line between the blade harness and the tail pick crane.
12. The arrangement for lifting and removal according to Clause 11, further comprising: a first mounting block for the first pulley attached to a first attachment point at a first adjacent rotor blade and a second mounting block for the second pulley attached to a second attachment point for a second adjacent rotor blade.
13. The arrangement for lifting and removal according to Clause 11 or 12, the first attachment point for the first mounting block comprises bolting to studs for a pitch bearing of the first adjacent rotor blade and the second attachment point for the second mounting block comprises bolting to studs for a pitch bearing of the second adjacent rotor blade.
14. The arrangement for lifting and removal according to any of Clauses 11 to 13, the blade harness disposed over a substantial length of the rotor blade further comprising:
   a longitudinal strap disposed along a pressure side and a longitudinal strap disposed along a suction side of the rotor blade, wherein said straps extend a length from approximately a root end to approximately a tip end of the rotor blade;
   a plurality of transverse straps advantageously fixed to said longitudinal straps and disposed at intervals along a substantial length of the rotor blade; and
   at least one lifting plate attached on the pressure side of the blade harness and at least one lifting plate attached on the suction side of the blade harness; and
   tightening means for the plurality of transverse straps.
15. The arrangement for lifting and removal according to any of Clauses 11 to 14, further comprising:
   at least one blade protector fixed to at least one of the plurality of transverse straps and adapted to engage the trailing edge of the rotor blade.
16. The arrangement for lifting and removal according to any of Clauses 11 to 15, the blade protector comprising:
   a stiff outer covering conformed to a general shape of the rotor blade surface along a pressure side of the trailing edge, the trailing edge, and along a suction side side of the trailing edge; and
   a flexible inner cushion conformed to a general shape of the rotor blade surface along a pressure side of the trailing edge, the trailing edge, and along a suction side side of the trailing edge.
17. The arrangement for lifting and removal arrangement according to any of Clauses 11 to 16, wherein the at least one blade protector is fastened to the trailing edge for lifting by at least one transverse strap.
18. The arrangement for lifting and removal according to any of Clauses 11 to 17, the at least one lifting plate on the suction side and the at least one lifting plate disposed on the pressure side of the blade harness is disposed at an intersection of the longitudinal strap and the transverse strap closest to the root of the blade..
19. The arrangement for lifting and removal according to any of Clauses 11 to 18, wherein the at least one tail end support line is attached to a lifting plate disposed at an intersection of the longitudinal strap and the transverse strap closest to the tip of the blade.
20. The arrangement for lifting and removal according to any of Clauses 11 to 19, wherein the tag lines are attached to the transverse strap closest to the tip of the blade.

## Claims

1. A lifting arrangement (200) for lifting and removal of a single wind turbine blade (305) from a six-o'clock position on a wind turbine tower (30), the lifting arrangement comprising:
a rotor hub (235) wherein a mounting for the rotor blade (305) is parked at a six-o'clock position;
a first pulley (240) and a second pulley (245) attached symmetrically to rotor hub (235) about the mounting (221) for the rotor blade (305);
a blade harness (300) disposed over a substantial length of the rotor blade (305);
a first ground winch (60) and a second ground winch (60) disposed around the base of the wind turbine tower (30);
a lifting line (270) from the first ground winch (60) over the first pulley (240) mounted from the rotor hub (235) and being attached to a first side of the blade harness (300) and a lifting line (275) from the second ground winch (60) over the second pulley (245) mounted from the rotor hub (235) and being attached to a second side of the blade harness (300);
a tail pick crane (80); and
a tail end support line (85) operatively connected between the blade harness (300) and the tail pick crane (80).

2. The lifting arrangement (200) according to Claim 1, further comprising: a first mounting block (280) for the first pulley (240) attached to a first attachment point (250) at a first adjacent rotor blade (225) and a second mounting block for the second pulley (245) attached to a second attachment point (255) for a second adjacent rotor blade (230).

3. The lifting arrangement (200) according to Claim 2, the first attachment point (250) for the first mounting block (280) comprises bolting to studs (253) for a pitch bearing of the first adjacent rotor blade (225) and the second attachment point (255) for the second mounting block (285) comprises bolting to studs (254) for a pitch bearing of the second adjacent rotor blade (230).

4. The lifting arrangement (200) according to any preceding Claim, the blade harness (300) disposed over a substantial length of the rotor blade (305) further comprising:
a longitudinal strap (310) disposed along a pressure side (315) and a longitudinal strap (310) disposed along a suction side (325) of the rotor blade (305), wherein said straps extend a length from approximately a root end (306) to approximately a tip end (307) of the rotor blade (305);
a plurality of transverse straps (340) advantageously fixed to said longitudinal straps (310) and disposed at intervals along a substantial length of the rotor blade (305);
at least one lifting plate (350) attached on the pressure side (315) of the blade harness (300) and at least one lifting plate (350) attached on the suction side (325) of the blade harness (300); and
tightening means (343) for the plurality of transverse straps (340).

5. The lifting arrangement for (200) according to Claim 4, further comprising:
at least one blade protector (390) fixed to at least one of the plurality of transverse straps (340) and adapted to engage the trailing edge (335) of the rotor blade (305).

6. The lifting arrangement for (200) according to Claim 5, the blade protector comprising:
a stiff outer covering (394) conformed to a general shape of a surface of the rotor blade (305) along a pressure side (315) of the trailing edge (335), the trailing edge (335), and along a suction side (325) of the trailing edge (335); and
a flexible inner cushion (394) conformed to a general shape of a surface of the rotor blade (305) along a pressure side (315) of the trailing edge (335), the trailing edge (335), and along a suction side (325) of the trailing edge (335);
wherein the at least one blade protector (390) is fastened to the trailing edge (335) for lifting by at least one transverse strap (340).

7. The lifting arrangement for (200) according to any of Claims 4 to 6,
wherein the at least one lifting plate (350) disposed on the suction side (315) of the rotor blade (305) and the at least one lifting plate (350) disposed on the pressure side (325) of the rotor blade (305) is disposed at an intersection of the longitudinal strap (310) and the transverse strap (345) closest to the root (306) of the rotor blade (305).

8. The lifting arrangement for (200) according to any preceding Claim,
wherein the at least one tail end support line (85) is attached to a lifting plate (348) disposed at an intersection of the longitudinal strap (310) and the transverse strap (347) closest to the tip (307) of the rotor blade (305).

9. The lifting arrangement (200) according to any preceding Claim, wherein a method for removing a rotor blade (305) from a rotor hub (235) of a wind turbine tower (30) with three rotor blades (305, 225, 230) comprises:
attaching a first pulley (175) to a first attachment point (280) at a first adjacent rotor blade (225) to a rotor blade being removed and attaching a second pulley (175) to a second attachment point (285) at a second adjacent rotor blade (230) to the rotor blade (305) being removed;
positioning the rotor blade (305) being removed in a six o'clock position;
attaching a blade harness (300) over a substantial length of the rotor blade (305) being removed;
attaching a first lifting line (270) from a first ground winch (60) over the first pulley (175) to the blade harness (300) and attaching a second lifting line (275) from a second ground winch (60) over the second pulley (175) to the blade harness (300);
attaching a tail end support line (85) between the blade harness (300) and a tail pick crane (80);
lowering the rotor blade (305) being removed by coordinated operation of ground winches (60); and
rotating the rotor blade (305) being removed to a horizontal resting position by coordinated operation of ground winches (60) and tail pick crane (80).

10. The lifting arrangement (200) according to any preceding Claim, wherein a method for removing a rotor blade (305) from a rotor hub (235) of a wind turbine tower (30) with three rotor blades (305, 225, 230) comprises:
positioning a mounting surface (221) of a rotor hub (235) for a rotor blade being installed in a six-o'clock position;
locating the rotor blade (305) being installed directly underneath the rotor hub (235);
attaching a blade harness (300) over a substantial length of the rotor blade (305) being installed;
atttaching a lifting line (270) from a first ground winch (60) over a first pulley (240) attached to the rotor hub (235) to a first side of the blade harness (300) and attaching a lifting line (275) from a second ground winch (60) over a second pulley (245) on the to a second side of the blade harness (300);
attaching a tail end support line (85) between the blade harness (300) and a tail pick crane (80); and
rotating the rotor blade (305) being installed from a horizontal position to a vertical position by coordinated operation of the ground winches (60) with operation of tail pick crane (80); and
raising the rotor blade (305) being installed by coordinated operation of the ground winches (60) to a mounting position (221).
